# EUROPEAN PATENT SPECIFICATION

(11) **EP 2 032 303 B1**
(45) Date of publication and mention of the grant of the patent: **02.11.2011**
(21) Application number: 07733693.1
(22) Date of filing: 17.05.2007
(51) Int. Cl.: B23K 26/06, B23K 26/38, B23K 26/14, G02B 7/04

(54) **LASER CUTTING HEAD WITH AN INLET FOR PRESSURISED GAS AND A LENS HOLDER AXIALLY DISPLACEABLE AWAY FROM A NOZZLE**
LASERSCHNEIDKOPF MIT EINEM EINLASS FÜR DRUCKGAS UND EINEM AXIAL VON EINER DÜSE WEG VERSCHIEBBAREN LINSENHALTER
TÊTE DE DÉCOUPAGE AU LASER DOTÉE D'UNE ADMISSION DE GAZ SOUS PRESSION ET D'UN PORTE-LENTILLE SUSCEPTIBLE D'ÊTRE ÉCARTÉ AXIALEMENT D'UNE BUSE

(30) Priority: 24.05.2006 GB 0610305
(43) Date of publication of application: 11.03.2009
(73) Proprietor: The BOC Group Limited, The Surrey Research Park Guildford Surrey GU2 7XY (GB)
(72) Inventor: JOHNSON, Andrew, Neil, Guildford Surrey GU2 7XY (GB); RAND, Christopher, Peter, Guildford Surrey GU2 7XY (GB); FIERET, Jim, Guildford Surrey GU2 7XY (GB)
(74) Representative: Wickham, Michael
(86) International application number: PCT/GB2007/050272
(87) International publication number: WO 2007/135460

(56) References cited:
- BE-A3- 1 009 138
- GB-A- 2 064 399
- JP-A- 8 110 455
- JP-A- 10 090 579
- US-A- 5 298 716
- US-A1- 2004 094 526

## Description

This invention relates to a laser cutting head according to the preamble of claim 1 (see, for example, US 5 298 716).

Laser cutting is a well known industrial process. There are a number of different laser cutting processes. In one kind of process the heat generated by the laser beam melts the workpiece to be cut and thereby effects a cut. Detritus from the cutting process tends to build up in the cut. A jet of gas is employed to blow the detritus away from the cut. Such laser-assist gas cutting processes have limited applications. An alternative kind of cutting process is one in which the laser is employed to preheat a workpiece to a temperature at which it will autogenously react with oxygen and a jet of oxygen is directed at the preheated region of the workpiece in order to effect the cut.

Typically, a laser cutting apparatus includes a head which may be attached to a suitable laser, which laser produces a laser beam that is approximately collimated. The collimation of the laser beam may under certain circumstances be adjusted by an optical collimator in the laser cutting apparatus. Typically a collimator comprises two lenses, the separation of which can be varied to alter the collimation characteristics of the laser beam. Other collimation devices may alternatively be used. The head carries a lens which produces a laser beam waist at a chosen location. This location may be on the surface of the workpiece to be cut. In laser-oxygen cutting, however, it is preferred that the laser beam waist is formed at such a distance away from the workpiece surface to be cut to enable an adequate area of the workpiece to be preheated. The precise position of the laser beam waist relative to the surface depends on the focal length of the lens carried by the head, the collimation characteristics of the laser beam and the setting of the collimator if such a device is flitted. Typically, the head has at its distal end a nozzle from which the jet of gas issues. Normally, the laser beam also passes through this nozzle.

GB-A-2 064 369 relates to a laser beam cutting device which has a focusing lens guided strictly parallel and coaxial with the optical axis of the device. The lens is provided in a mounting which is held by an arrangement of inner and outer shells. The outer shell is axially displaceable within a housing. In the housing there is located a screw-threaded adjusting ring. The internal screw thread of the adjusting ring engages a mating outer screw thread of the outer shell. By turning the adjusting ring the shell assembly structure, and with it the focussing lens, can be moved axially without tilting the lens.

JP-A-08110455 relates to an arrangement of two optical lenses. The lenses are secured by lens holders which carry circumferentially-spaced cam pins that are mounted in cam grooves in a barrel locating the lens holders. JP-A-10090579 also discloses an arrangement of a lens holder carrying circumferentially-spaced pins for the mounting of a lens within a barrel.

BE-A-1 009 138 discloses the use of a mechanical blocking means for avoiding any involvement of a lens holder during transport.

US-A-5 298 716 relates to a laser cutting head having a nozzle and a lens disposes within a holder. The holder is axially displaceable by means of a mechanical drive comprising an arrangement of piston and external cylinder.

There is a need for a laser cutting head whose lens can be reproducibly positioned axially according to the nature of the workpiece to be cut. It is an aim of this invention to provide a laser cutting head that meets this need.

According to the present invention there is provided a laser cutting head, comprising a lens for producing a waist in a laser beam, an internal chamber having an inlet for pressurised gas, an outlet nozzle for both the laser beam and a jet of pressurised gas which communicates with the internal chamber, an inner hollow generally cylindrical lens holder which holds the lens, the lens holder having a body which (i) makes sliding engagement with an outer sleeve, (ii) holds the lens and (iii), in use, is axially displaceable away from the nozzle, **characterised in that** the laser cutting head additionally comprises a plurality of transverse pins extending through slots in the outer sleeve to engage the body of the lens holder, and an outermost adjustable limit ring the axial position of which is able to be reproducibly set, and which engages the sleeve, the adjustable limit ring defining the axial position of the lens holder, in that the heads of the pins engage a sliding ring which in use abuts the limit ring, and in that the sleeve also carries a securing ring in screw-threaded engagement therewith, the securing ring being located intermediate the nozzle and the pins, whereby the securing ring is able to be set in a chosen position to prevent any axial displacement of the lens holder towards the nozzle in the event of a relaxation of the pressure in the internal chamber.

The laser cutting head is preferably readily connectable to a laser cutting apparatus.

The adjustable limit ring preferably has a visible face carrying a scale and preferably makes a screw threaded engagement with the outer surface of the sleeve. There is typically a complementary mark on the sleeve enabling any axial position of the limit ring to be recorded by virtue of the juxtaposition of the scale to the mark.

There are preferably three circumferentially spaced pins, equally spaced apart from one another.

The gas is preferably oxygen. It is typically supplied at a pressure in the range of 10 to 20 bar, but lower pressures, for example down to 1 bar, may be used instead, particularly for piercing. If oxygen is used, the materials of construction of the head need to be compatible with it.

The nozzle is preferably demountably attached to a nozzle holder which is secured to the distal end of the sleeve.

The internal chamber preferably has an inlet through the sleeve.

The term "cutting" as used herein encompasses cutting, piercing, gouging and any other machining of a workpiece.

A laser cutting head according to the invention will now be described by way of example with reference to the accompanying drawing which is a sectional side elevation of the head.

The drawing is not precisely to scale.

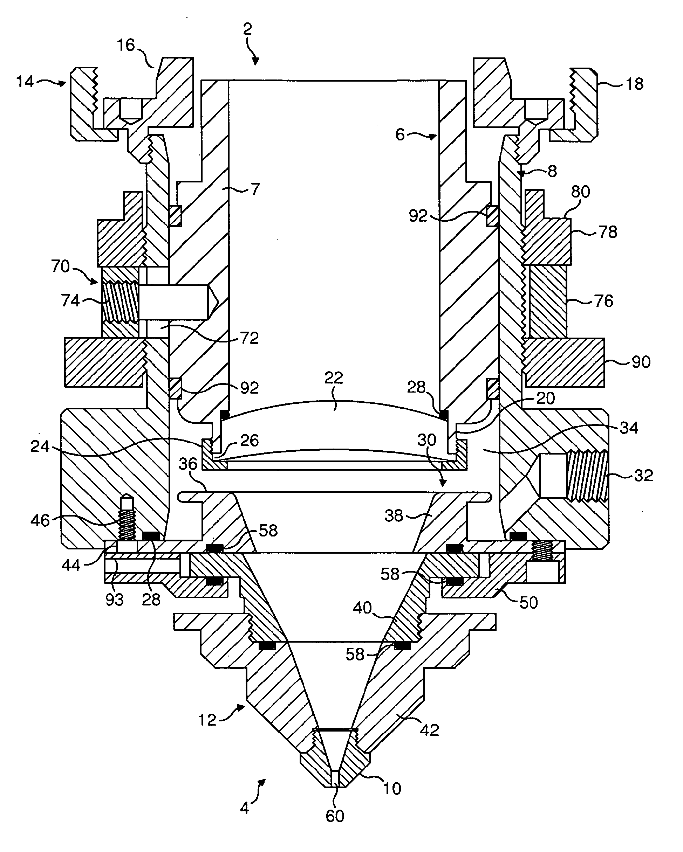

Referring to the drawing, a laser cutting head has a proximal end 2 and a distal end 4. The laser cutting head comprises an inner hollow generally cylindrical lens holder 6 having an elongate body 7 which makes a sliding engagement within a sleeve 8. The head has at its distal end a nozzle 10 which is held in a nozzle holder 12. The nozzle holder 12 is secured to the distal end of the sleeve 8. The proximal end of the sleeve 8 engages an adaptor 14 which is of a configuration which enables it to be connected to a given commercially available laser cutting apparatus of sufficient power to make a given cut. The laser may for example be a carbon dioxide laser, but other kinds of laser (e.g. diode lasers, fibre lasers, Nd:YAG laser) may be employed instead. As shown in Figure 1, the adaptor 14 comprises inner and outer members 16 and 18, respectively, but it will be understood that the configuration and construction of this adaptor 14 depends on the choice of laser cutting apparatus.

The lens holder 6 and the sleeve 8 are positioned coaxially with the nozzle 10. The lens holder 6 has a cross section portion 20 of enlarged internal cross-section at its distal end. It is in this cross-sectional portion 20 that lens 22 is held. The lens is retained by a ring 24 which engages the portion 20. A sealing washer 26 is held between the distal end portion 20 of the lens holder 6 and the ring 24. A lens sealing ring 28 is also provided on the proximal side of the lens 22. The purpose of the washer 26 and the sealing ring 28 is to prevent or minimise leakage of gas from an internal chamber 30 into the hollow interior of the lens holder 6 and to ensure that the lens 22 has no significant displacement when the head is pressurised. A source of gas under pressure, for example a gas cylinder, may be placed in communication with the chamber 20 through an orifice 32 in the distal portion of the sleeve 8. The chamber 30 includes a generally annular space 34 which is defined between the distal end of the sleeve 8 and the proximal end of the nozzle holder 12 and which ensures an even circumferential distribution of the gas. The proximal end of the nozzle holder 12 has a flat surface 36.

The nozzle holder 12 comprises three main hollow open ended parts, namely a proximal part 38, an intermediate part 40 and a distal part 42. The proximal part 38 has an integral flange 44. The intermediate part 40 of the nozzle holder 12 is contiguous to the proximal part 38 and is held in sealing engagement therewith by means of an adjustment ring 50 which is bolted or otherwise secured by screw or bolts 46 to flange 44 of the proximal part 38. There is a plurality of equally spaced circumferential screws or bolts 46 (of which only one is shown in the drawing) extending through the flange 44 and holding the proximal part 38 of the nozzle holder 12 to the distal end of the sleeve 8. For example ten such screws 46 may be provided. The intermediate part 40 of the nozzle holder 12 carries the distal part 42. Each of the parts 38, 40 and 42 defines a frusto-conical shaped gas passage. The adjustment ring 50 enables the parts 40 and 42 of the frusto-conical gas passage to be precisely axially positioned by means of two pairs of diametrically opposed set screws 93 provided in the adjustment ring 50, only one of which screws 93 is shown in the drawing. In order to prevent or minimise leakage of gas between the respective parts of the nozzle holder 12 and the distal end of the sleeve 8 conventional sealing rings 58 are provided. The nozzle 10 preferably has a precisely contoured shape so as to produce a concise non-divergent high velocity gas jet..

In use, the gas pressure in the chamber 30 urges the lens holder 6 away from the nozzle 10. The body 7 of the lens holder 6 carries four transverse pins 70 (of which only one is shown in the drawing). The pins 70 extend through complementary slots 72 in the sleeve 8. Each pin 70 has a head 74 which terminates outside the sleeve 8. Each head 74 of the pins 70 engages a sliding location ring 76. Located on the proximal side of the sliding location ring 76 is an adjustable limit ring 78. The limit ring 78 has an internal thread which engages a complementary screw thread on the outer surface of the sleeve 8. The position of the limit ring 78 is thereby able to be precisely set. If desired, the face 80 of the limit ring 78 may have a circumferential scale (not shown) whose position relative to a mark (not shown) on the sleeve 8 can be observed. Accordingly, the position of the limit ring 78 can be reproducibly set. It is this position which determines the position of the lens holder 6 and hence of the lens 22 in use of the laser cutting head. This in turn determines the axial position of the focal point of the lens 22 relative to a workpiece (not shown) to be cut. In one typical example, the gas supplied to the chamber 30 is commercially pure oxygen. In this instance, it is typically desired for the waist of the laser beam to be positioned above the workpiece so that a defocused divergent beam is incident thereupon. Accordingly, for given collimation characteristics of the laser beam and given settings of any collimator (not shown), the axial position of the lens 22 relative to the workpiece determines the area of the workpiece upon which the laser beam is incident. Thus, the precise dimensions of the area which is to be preheated by the laser beam can be controlled.

The position of the adjustment ring 78 determines the axial position of the lens holder 6 and hence the lens 22 because it acts as a stop to the sliding location ring 76 which is carried by the pins 70. The pressure of the oxygen or other gas in the chamber 30 thus urges the lens holder 6 into a precise position in which the location ring 76 abuts the limit ring 78.

Normally, in use of the laser head to make a cut, the pressure in the chamber 30 is constant. It is desirable, however, in the event of any relaxation of this pressure, for example, during a piercing operation, to provide a further screw-threaded ring 90 on the distal side of the pins 70 and the sliding location ring 76. The ring 90 has screw threads (not shown) on its inner surface which engage complementary threads on the outer surface of the sleeve 8. The ring 90 is turned on its thread so as to push the location ring 76 upwards until it abuts the limit ring 78. In this position, the ring 90 ensures that the lens holder 6 does not change position in the event of a change of pressure in the chamber 30.

In order to prevent leakage of gas from the chamber 30 between the body 7 of the lens holder 6 and the inner surface of the sleeve 8, a pair of spring-loaded PTFE sealing rings 92 are engaged therebetween. The frictional resistance provided by the sealing rings 92 prevents manual adjustment of the axial position of the lens holder 6 other than by turning the ring 90 on its thread.

Typically, the lens holder 6, the sleeve 8 and the nozzle holder 12 and the sliding location ring 76 are all made of stainless steel. The rings 78 and 90 may be made of copper or brass. The nozzle 10 is preferably made of copper. The nozzle 10 may have a relatively short operational life. It is therefore demountably positioned within the nozzle holder 12 so that it can be readily replaced with an identical nozzle.

In normal use of the laser head shown in the drawing, it is coupled to a laser cutting apparatus (not shown) such that the axis of the head and hence the nozzle is vertical. Accordingly, the pins are then in a horizontal position. In operation, a laser beam is transmitted through the hollow interior of the lens holder 6 and is focused by the lens 22 so that essentially all of the beam passes through the nozzle 10. Oxygen is supplied to the chamber 30 and a jet of oxygen issues with the laser beam through the nozzle 10. As described above, the laser beam preheats a chosen surface area of a workpiece to be cut. The preheating is effective to raise the temperature of the surface to one in which it reacts autogenously with oxygen. This reaction causes the cut to be made. If, as is typically required, the cut is elongate the laser head is moved relatively to the work, or vice versa.

## Claims

1. A laser cutting head comprising a lens (22) for producing a waist in a laser beam, an internal chamber (30) having an inlet (32) for pressurised gas, an outlet nozzle (10) for both the laser beam and a jet of pressurised gas which communicates with the internal chamber (30), an inner hollow generally cylindrical lens holder (6) which holds the lens (22), the lens holder (16) having a body (17) which (i) makes sliding engagement with an outer sleeve (8), (ii) holds the lens (22) and (iii), in use, is axially displaceable away from the nozzle (10), **characterised in that** the laser cutting head additionally comprises a plurality of transverse pins (70) extending through slots (72) in the outer sleeve (8) to engage the body (7) of the lens holder (6), and an outermost adjustable limit ring (78), The axial position of which is able to be reproducibly set, and which engages the sleeve (8), the adjustable limit ring (78) defining the axial position of the lens holder (16), **in that** the heads (74) of the pins (70) engage a sliding ring (76) which in use abuts the limit ring (78), and **in that** the sleeve (8) also carries a securing ring (90) in screw-threaded engagement therewith, the securing ring (90) being located intermediate the nozzle (10) and the pins (70), whereby the securing ring (90) is able to be set in a chosen position to prevent any axial displacement of the lens holder (6) towards the nozzle (10) in the event of a relaxation of the pressure in the internal chamber (30).

2. A laser cutting head according to claim 1, wherein the adjustable limit ring (78) has a visible face (80) carrying a scale

3. A laser cutting head according to claim 1 or claim 2, wherein the adjustable limit ring (78) makes a screw threaded engagement with the outer surface of the sleeve (8).

4. A laser cutting head according to claims 2 and 3, wherein there is a complementary mark on the sleeve (18) enabling any axial position of the limit ring (78) to be recorded by virtue of the juxtaposition of the scale to the mark.

5. A laser cutting head according to any one of the preceding claims, wherein there are four circumferentially spaced pins (78), equally spaced apart from one another.

6. A laser cutting head according to any one of the preceding claims, wherein the nozzle (10) is demountably attached to a nozzle holder (12) which is secured to the distal end of the sleeve (8).

## Patentansprüche

1. Laserschneidkopf, der eine Linse (22) zum Erzeugen einer Einschnürung in einem Laserstrahlenbündel, eine Innenkammer (30) mit einem Einlass (32) für mit Druck beaufschlagtes Gas, eine Auslassdüse (10) sowohl für das Laserstrahlenbündel als auch für einen Strahl von mit Druck beaufschlagtem Gas, die mit der Innenkammer (30) kommuniziert, und einen innen hohlen, im Allgemeinen zylindrischen Linsenhalter (6), der die Linse (22) hält, umfasst, wobei der Linsenhalter (16) einen Körper (17) besitzt, der (i) einen Gleiteingriff mit einer Außenhülse (8) herstellt, (ii) die Linse (22) hält und (iii) im Gebrauch von der Düse (10) weg axial verlagerbar ist, **dadurch gekennzeichnet, dass** der Laserschneidkopf außerdem mehrere Querstifte (70), die sich durch Schlitze (72) in der Außenhülse (8) erstrecken, um mit dem Körper (7) des Linsenhalters (6) in Eingriff zu gelangen, und einen äußersten einstellbaren Begrenzungsring (78), dessen axiale Position reproduzierbar eingestellt werden kann und der mit der Hülse (8) in Eingriff ist, umfasst, wobei der einstellbare Begrenzungsring (78) die axiale Position des Linsenhalters (16) definiert, dass die Köpfe (74) der Stifte (70) mit einem Gleitring (76) in Eingriff sind, der in Gebrauch an dem Begrenzungsring (78) anliegt, und dass die Hülse (8) außerdem einen Sicherungsring (90) trägt, der damit in einem Gewindeeingriff ist, wobei sich der Sicherungsring (90) zwischen der Düse (10) und den Stiften (70) befindet, wodurch der Sicherungsring (90) in eine gewählte Position eingestellt werden kann, um jegliche axiale Verlagerung des Linsenhalters (6) zu der Düse (10) zu verhindern, falls der Druck in der Innenkammer (30) entspannt wird.

2. Laserschneidkopf nach Anspruch 1, wobei der einstellbare Begrenzungsring (78) eine sichtbare Fläche (80) besitzt, die eine Skala trägt.

3. Laserschneidkopf nach Anspruch 1 oder 2, wobei der einstellbare Begrenzungsring (78) mit der äußeren Oberfläche der Hülse (8) in einem Gewindeeingriff ist.

4. Laserschneidkopf nach den Ansprüchen 2 und 3, wobei an der Hülse (18) eine komplementäre Markierung vorhanden ist, die ermöglicht, irgendeine axiale Position des Begrenzungsrings (78) kraft der Nebeneinanderanordnung von Skala und Markierung aufzuzeichnen.

5. Laserschneidkopf nach einem der vorhergehenden Ansprüche, wobei vier in Umfangsrichtung beabstandete Stifte (78) vorhanden sind, die gleichmäßig voneinander beabstandet sind.

6. Laserschneidkopf nach einem der vorhergehenden Ansprüche, wobei die Düse (10) an einem Düsenhalter (12), der am distalen Ende der Hülse (8) befestigt ist, lösbar angebracht ist.

## Revendications

1. Tête de découpe au laser comprenant une lentille (22) qui produit un étranglement dans un faisceau laser, une chambre intérieure (30) dotée d'une entrée (32) de gaz sous pression, un ajutage (10) permettant à la fois la sortie du faisceau laser et celle du jet de gaz sous pression, en communication avec la chambre intérieure (30), un porte-lentille (6) en forme générale de cylindre creux intérieurement qui porte la lentille (22), le porte-lentille (16) présentant un corps (17) qui (i) engage à coulissement un manchon extérieur (8), (ii) maintient la lentille (22) et (iii) peut en utilisation être éloigné axialement de l'ajutage (10),
**caractérisée en ce que**
la tête de découpe au laser comprend de plus plusieurs goujons transversaux (70) qui traversent des fentes (72) ménagées dans le manchon extérieur (8) pour engager le corps (7) du porte-lentille (6) et une bague limite extérieure ajustable (78) dont la position axiale peut être fixée de manière reproductible et qui engage le manchon (8), la bague limite ajustable (78) définissant la position axiale du porte-lentille (16) par le fait que les têtes (74) des goujons (70) engagent une bague coulissante (76) qui vient buter contre la bague limite (78) en utilisation et
**en ce que** le manchon (8) porte également une bague de fixation (90) qu'elle engage par filetage, la bague de fixation (90) étant située entre l'ajutage (10) et les goujons (70), la bague de fixation (90) pouvant être placée en une position sélectionnée pour empêcher tout déplacement axial du porte-lentille (6) en direction de l'ajutage (10) en cas de relâchement de la pression dans la chambre intérieure (30).

2. Tête de découpe au laser selon la revendication 1, dans laquelle la bague limite (78) présente une face visible (80) portant une échelle.

3. Tête de découpe au laser selon la revendication 1 ou la revendication 2, dans laquelle la bague limite (78) engage par filetage la surface extérieure du manchon (8).

4. Tête de découpe au laser selon les revendications 2 et 3, dans laquelle un repère complémentaire sur le manchon axial (18) permet d'enregistrer la position axiale de la bague limite (78) par juxtaposition de l'échelle sur le repère.

5. Tête de découpe au laser selon l'une quelconque des revendications précédentes, qui présente quatre goujons (78) répartis à la circonférence à des distances mutuelles égales.

6. Tête de découpe au laser selon l'une quelconque des revendications précédentes, dans laquelle l'ajutage (10) est fixé de manière démontable sur une porte-ajutage (12) fixé à l'extrémité distale du manchon (8).
